# EUROPÄISCHE PATENTSCHRIFT

(11) **EP 0 767 097 B1**
(45) Veröffentlichungstag und Bekanntmachung des Hinweises auf die Patenterteilung: **03.11.1999**
(21) Anmeldenummer: 96112597.8
(22) Anmeldetag: 03.08.1996
(51) Int. Cl.: B62B 3/10, B62B 3/02

(54) **Transportwagen, insbesondere für Plattenmaterial**
Trolley, especially for panels
Chariot, spécialement pour panneaux

(30) Priorität: 05.10.1995 DE 29515812 U
(43) Veröffentlichungstag der Anmeldung: 09.04.1997
(73) Patentinhaber: LIGMATECH MASCHINENBAU GmbH, D-09638 Lichtenberg (DE)
(72) Erfinder: Jenker, Erwin, 71083 Herrenberg-Oberjesingen (DE)
(74) Vertreter: Dreiss, Fuhlendorf, Steimle & Becker, Patentanwälte

(56) Entgegenhaltungen:
- AT-A- 300 661
- DE-U- 29 506 073

## Beschreibung

Die Erfindung betrifft einen Transportwagen insbesondere für Plattenmaterial gemäß dem Oberbegriff des Schutzanspruchs 1.

Aus dem deutschen Gebrauchsmuster G 295 06 073.5 ist ein gattungsgemäßer Transportwagen bekannt, mit dem Plattenmaterial transportierbar ist. Dieser Transportwagen ist jedoch lediglich für plattenförmiges Material geeignet, dessen Abmessungen derart begrenzt sind, daß das Plattenmaterial auf einer Wagenbodenplatte abstellbar ist. Für großflächige, plattenförmige Werkstücke weist der bekannte Transportwagen an seiner Hinterseite zusätzlich eine Aufnahmevorrichtung auf, die aus zwei U-förmigen Halterungen gebildet ist. Die Aufnahmevorrichtung ist so bemessen, daß sie nur eine geringe Anzahl großflächiger, plattenförmiger Werkstücke aufnehmen kann, damit der Transportwagen durch die hinten aufgenommene Last nicht umkippt. Weiter nachteilig ist, daß die großflächigen, plattenförmigen Werkstücke von einer Stirnseite des Transportwagens her in die U-förmigen Halterungen eingeschoben werden müssen, was aufgrund des großen Gewichtes großflächiger Werkstücke sehr beschwerlich ist.

Ausgehend von diesem Stand der Technik ist es Aufgabe der Erfindung, einen Transportwagen bereitzustellen, der für eine Vielzahl von Anwendungsmöglichkeiten nutzbar ist und mit dem insbesondere Werkstücke unterschiedlichster Abmessungen transportierbar sind.

Diese Aufgabe wird gelöst durch einen gattungsgemäßen Transportwagen mit den kennzeichnenden Merkmalen des Schutzanspruchs 1.

Mit dem erfindungsgemäßen Transportwagen können großformatige Werkstücke bequem transportiert werden. Zunächst ist das Aufladen derartiger Werkstücke erheblich leichter, denn bei abgenommenem vorderen und oberen Rahmenschenkel der Gestellseitenteile muß das großformatige und damit in der Regel auch schwere Werkstück lediglich nur leicht angehoben und auf die unteren Rahmenschenkel oder eine dazwischen befindliche Bodenplatte abgelegt werden. Der Transport ist sicherer, denn die großformatigen Werkstücke lagern nicht mehr nur an der Hinterseite des Transportwagens auf. Eine Kippgefahr für den Transportwagen besteht somit nicht mehr.

Auf den erfindungsgemäßen Transportwagen lassen sich nicht nur in vorteilhafter Weise großformatige, plattenförmige Werkstücke aufbringen und transportieren, sondern mit besonderem Vorteil kann der Transportwagen auch für den Transport von beispielsweise Langprofilen aus Holz oder Metall, die hohl oder massiv sein können, eingesetzt werden. Dabei ist zunächst der Transportwagen bei abgenommenen vorderen und oberen Rahmenschenkeln seiner Gestellseitenteile mit den Langprofilen zu beladen, wonach die vorderen und oberen Rahmenschenkel wieder mit den hinteren und unteren Rahmenschenkeln der Gestellseitenteile verbunden werden. Die über die Stirnseiten des Transportwagens hinausragenden Langprofile sind dann gegen ein Herunterfallen gesichert, indem sie sich zwischen den vertikelen Rahmenschenkeln der Gestellseitenteile befinden.

Damit der Transportwagen auch bei abgenommenen vorderen und oberen Rahmenschenkeln eine ausreichende Stabilität aufweist, sind die unteren Rahmenschenkel als Kasten- bzw. Hohlprofile ausgebildet. Diese Ausgestaltung eröffnet auch die Möglichkeit, weitere Elemente an die unteren Rahmenschenkel anzubringen.

Besonders günstig ist eine Ausgestaltung der Erfindung nach Anspruch 3. In diesem Fall lassen sich insbsondere lange, plattenförmige Werkstücke sicherer transportieren, indem diese beim Transport an die Stangen in Schräglage angelehnt werden können.

Da hierbei die Platten während des Transportes aufgrund ihrer Schräglage nicht vom Transportwagen abrutschen können, sind gemäß Anspruch 4 Anschläge an den unteren Rahmenschenkeln angeordnet.

Bevorzugt sind die Anschläge gemäß Anspruch 5 vorgesehen, wodurch sie sich von Hand in die Anschlagstellung bringen und in dieser festlegen lassen.

Um dem Transportwagen genügende Eigensteifigkeit, insbesondere bei abgenommenen vorderen und oberen Rahmenschenkeln zu verleihen, sind gemäß Anspruch 6 die hinteren Rahmenschenkel beider Gestellseitenteile im oberen und unteren Endbereich des hinteren Gestellteils in Scharnierkörpern gelagert und die unteren Rahmenschenkel jeweils mit den zugeordneten hinteren Rahmenschenkeln der Gestellseitenteile drehfest verbunden, insbesondere verschweißt.

Vorteilhafterweise bildet der obere Scharnierkörper ein Auflager für das hintere Ende des oberen Rahmenschenkels, in welchem der obere Rahmenschenkel zugleich auch zur Seite hin abgestützt wird, so daß die Gestellseitenteile stabile Stützen für an diese angelehnte, zu transportierende Werkstücke bilden.

In einer Ausgestaltung nach Anspruch 9 können vorderer und oberer Rahmenschenkel am Transportwagen bei Nichtgebrauch raumsparend untergebracht werden. Sie stehen stets griffbereit zum Aufbau eines kompletten rahmenartigen Gestellseitenteils zur Verfügung.

In einer Ausgestaltung der Erfindung gemäß Anspruch 10 können auch kleinere Werkstücke auf der Bodenplatte abgesetzt und mit dem Transportwagen transportiert werden, die bei einer Ausgestaltung nach Anspruch 11 von Plattenhalteleisten derart abgestützt werden können, daß sie sich in seitlichem Abstand voneinander und damit gegenseitig berührungslos und somit oberflächenschonend aufstellen lassen.

Die Erfindung wird im folgenden anhand eines Ausführungsbeispiels unter Bezugnahme auf die Zeichnung im einzelnen beschrieben. In der Zeichnung zeigen:
- Figur 1: eine Wagenvorderansicht,
- Figur 2: einen Teil des Transportwagens in Draufsicht,
- Figur 3: eine Wagenseitenansicht,
- Figur 4: eine Ansicht ähnlich Figur 3 in Explosionsdarstellung,
- Figur 5: eine Seitenansicht einer abgewandelten Wagenausführung,
- Figur 6: eine schaubildliche Darstellung von am Transportwagen in Nichtgegebrauchslage angeordneten Anschlägen,
- Figur 7: eine Darstellung wie Figur 6 mit den Anschlägen in Anschlagstellung,
- Figur 8: eine schaubildliche Darstellung eines Auflagers für das hintere Ende eines oberen Rahmenschenkels.

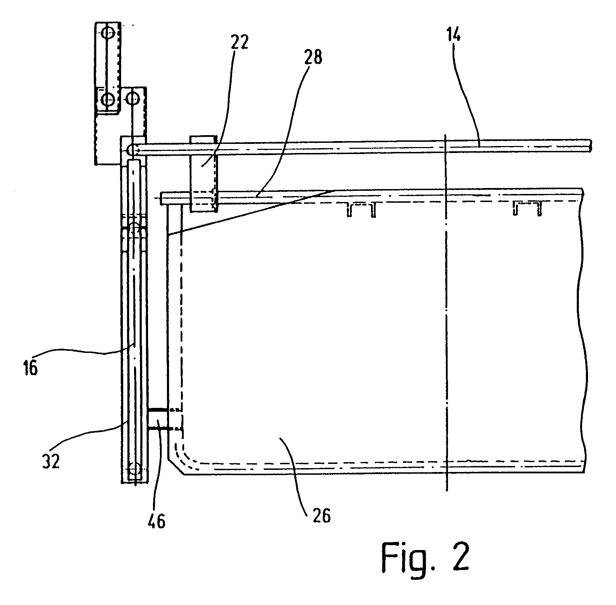

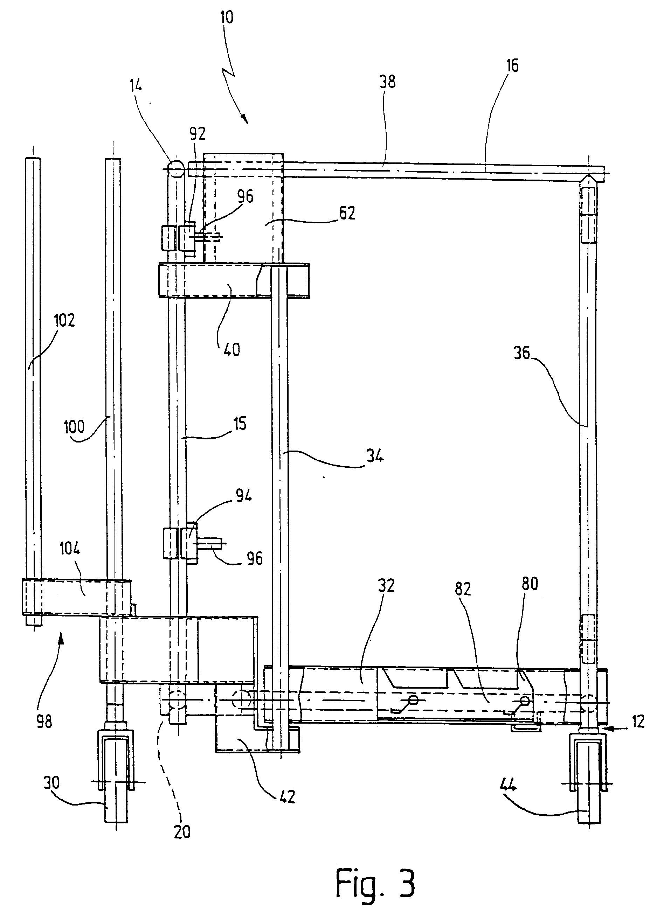

Ein in der Zeichnung dargestellter Transportwagen 10 weist ein als Ganzes mit 12 bezeichnetes, in Draufsicht rechteckförmiges Fahrgestell mit einem an der einen Wagenlängsseite vorgesehenen aufrechten, hinteren Gestellteil 14 und zwei, jeweils an einer der Gestellstirnseiten aufrecht vorgesehene Gestellseitenteile 16 und 18 auf. Gestellteile 14, 16 und 18 sind vorzugsweise zumindest teilweise als Rohrkonstruktion ausgebildet. Das hintere Gestellteil 14 ist dabei durch ein umgekehrt U-förmig gebogenes Stahlrohr 15 gebildet, das am unteren Ende mit einem unteren, rohrförmigen Längsschenkel 20 des Fahrgestells 12 fest verbunden ist (Figur 3). Auf dem Längsschenkel 20 sind erste Scharnierkörper 22 befestigt, in welchen eine eine Bodenplatte 26 tragende Scharnierwelle 28 gelagert ist (Figur 2).

Die beiden Gestellseitenteile 16 und 18 sind jeweils aus vier, einen rechteckigen Rahmen bildenden Rahmenschenkeln 32, 34, 36 und 38 gebildet (Figur 3). Die hinteren Rahmenschenkel 34 sind an ihren Enden jeweils in einem oberen und einem unteren Scharnierkörper 40 bzw. 42 um vertikale Achsen verschwenkbar gelagert. Obere und untere Scharnierkörper 40 und 42 sind an den U-Schenkeln 15 des hinteren Gestellteils 14 drehfest gehalten. Die unteren Scharnierkörper 42 sind auf Schwenklaufrollen 30 abgestützt.

Die hinteren Rahmenschenkel 34 sind drehfest mit den unteren Rahmenschenkeln 32 verbunden, vorzugsweise verschweißt. Die unteren Rahmenschenkel 32 sind als Kastenprofile ausgebildet und in ihrem vorderen Endbereich auf Schwenklaufrollen 44 abgestützt.

In ihrer horizontalen Gebrauchslage stützt sich die Bodenplatte 26 zwischen den zum hinteren Gestellteil 12 senkrecht gelegenen Gestellseitenteilen 16 und 18 an den unteren Rahmenschenkeln 32 ab, wozu von diesen in ihrem vorderen Endbereich jeweils eine Plattenstütze 46 nach innen abragt, auf welchen die Bodenplatte 26 aufruht (Figur 2).

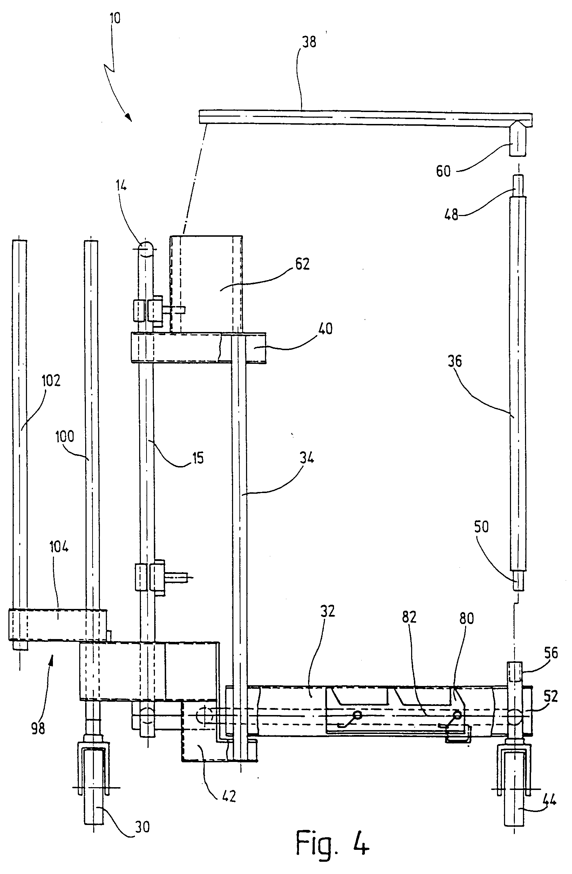

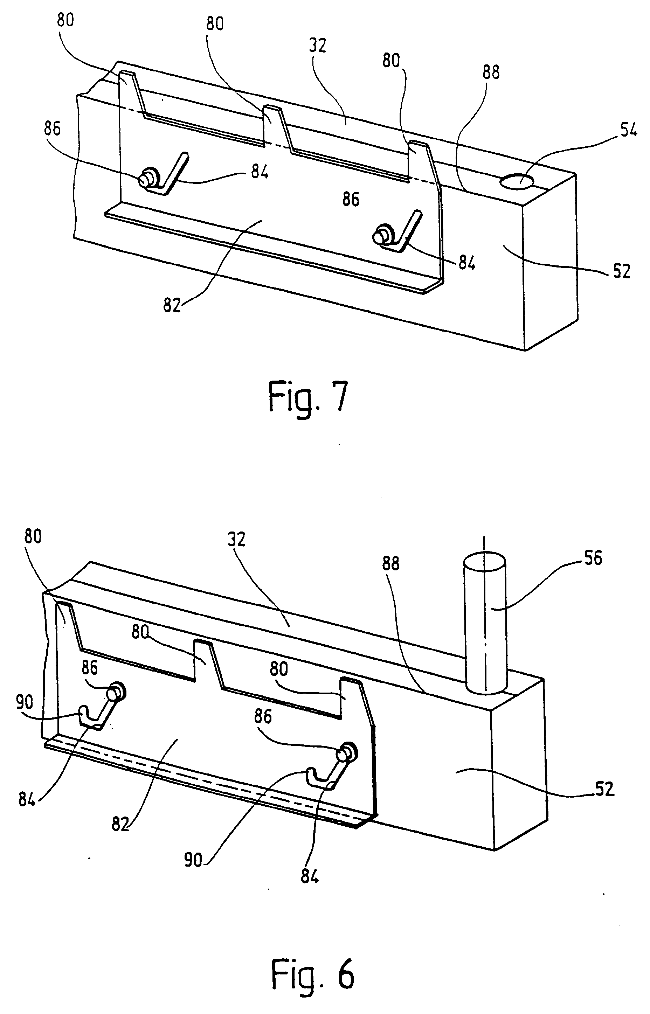

Die vorderen und oberen Rahmenschenkel 36 und 38 sind vorzugsweise durch Rohre gebildet. Sie sind von den unteren und hinteren Rahmenschenkeln 32 und 34 abnehmbar angeordnet (Figur 4). Dazu weist der vordere Rahmenschenkel 36 an seinen Enden einen oberen und einen unteren Zapfen 48 bzw. 50 auf. Mit dem unteren Zapfen 50 ist der vordere Rahmenschenkel 36 in ein vorderes Endstück 52 des unteren Rahmenschenkels 32 einsteckbar. Der untere Zapfen 50 kann beispielsweise von einer Ausnehmung 54 oder einem Rohrendstück 56 aufgenommen werden (vgl. Figuren 6 und 7). Der obere Rahmenschenkel 38 weist an seinem vorderen Ende einen im rechten Winkel zu dem Rohr angebrachten Rohrabschnitt 60 auf, der auf den oberen Zapfen 48 des vorderen Rahmenschenkels 36 aufsteckbar ist (Figur 4).

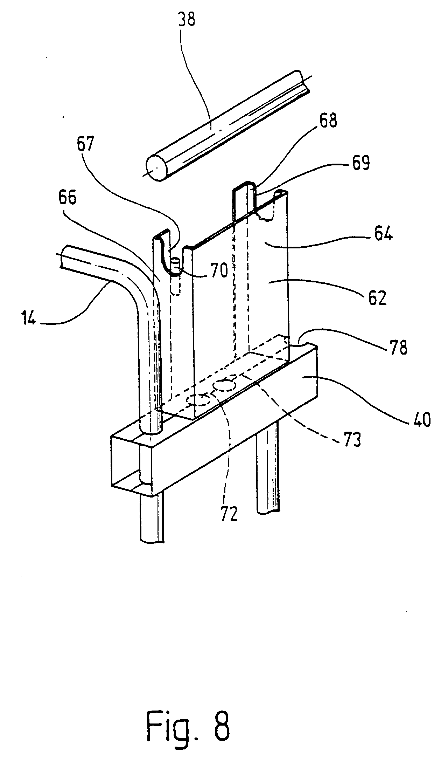

Mit seinem hinteren Ende ruht der obere Rahmenschenkel 38 auf einem u. a. in Figur 8 dargestellten Auflager 62 auf, das einen Teil des oberen Scharnierkörpers 40 bildet. Das Auflager 62 besteht im wesentlichen aus einem U-förmigen Blechprofil 64, dessen U-Schenkel 66 und 68 Ausnehmungen 67 und 69 aufweisen, in die der obere Rahmenschenkel 38 formschlüssig eingreift. Durch die Lagerung des oberen Rahmenschenkels 38 in den Ausnehmungen 67 und 69 der beiden U-Schenkel 66 und 68 des Blechprofils 64 erhält das Gestellseitenteil 16 bzw. 18 eine ausreichende Seitenstabilität. Bevorzugt weist das Auflager 62 einen Positionierzapfen 70 auf, der in eine nicht dargestellte Ausnehmung des oberen Rahmenschenkeis eingreift. Dadurch ist der obere Rahmenschenkel 38 verrutschsicher in dem Auflager 62 festgelegt.

Um beispielsweise großflächige, plattenförmige Werkstücke mit dem erfindungsgemäßen Transportwagen 10 transportieren zu können, werden die oberen und vorderen Rahmenschenkel 38 und 36 entfernt, indem zunächst die oberen Rahmenschenkel 38 und dann die vorderen Rahmenschenkel 36 abgenommen werden. Die oberen und vorderen Rahmenschenkel 38 und 36 können in Durchbrüche 72 und 73 des das Auflager 62 aufweisenden oberen Scharnierkörpers 40 aufrecht eingesteckt werden. Die eingesteckten Rahmenschenkel 36 und 38 stehen auf den unteren Scharnierkörper 42 auf.

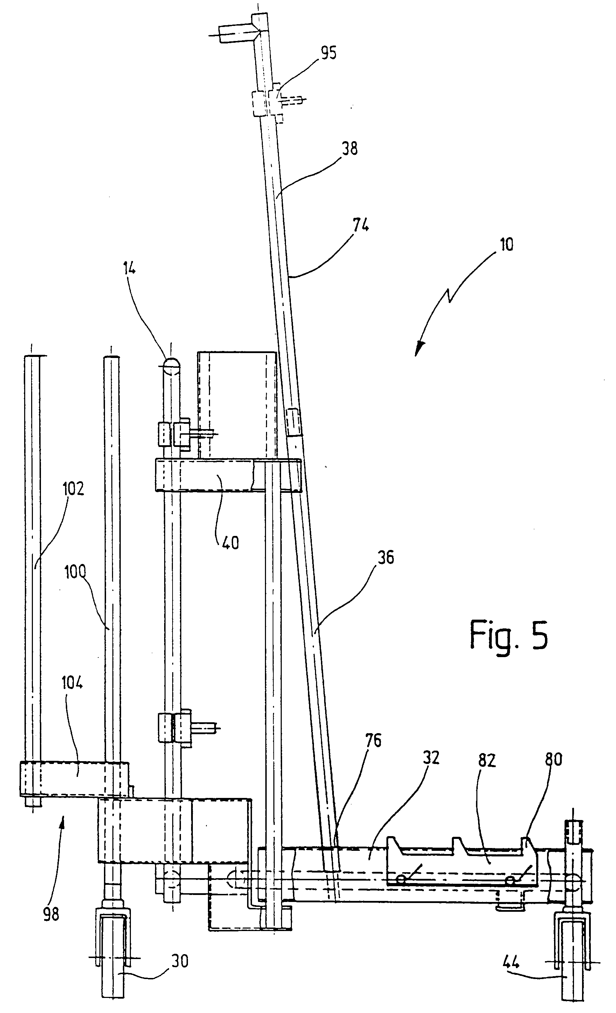

Sind großflächige, plattenförmige Werkstücke zu transportieren, können bei einer weiteren Ausführungsform die oberen und vorderen Rahmenschenkel 38 und 36 der Gestellseitenteile zu einer Stange 74 zusammengesteckt werden (Fig. 5) und diese Stangen 74 können jeweils auf dem zugeordneten, unteren Rahmenschenkel 32, in Richtung auf das hintere Gestellteil 14 geneigt, aufgestellt werden. Dazu weist der aus einem Kastenprofil gebildete, untere Rahmenschenkel 32 auf seiner Oberseite eine Bohrung 76 auf, in die ein Ende der Stange 74 einsteckbar ist. Die Stange 74 ist nach hinten durch den oberen Scharnierkörper 40 abgestützt, der hierzu eine etwa halbkreisförmige Ausnehmung 78 aufweist (Fig. 8) und somit die Stange 74 gegen ein seitliches Abkippen sichert. Gegen die aufgestellten Stangen 74 können dann die großflächigen, plattenförmigen Werkstücke angelehnt werden.

Um derartige, auf den unteren Rahmenschenkeln 32 abgestützte Werkstücke beim Transport in Längsrichtung des unteren Rahmenschenkels 32 zu sichern, damit sie nicht nach vorne abrutschen können, weist der untere Rahmenschenkel 32 in seiner Längsrichtung im Abstand voneinander vorgesehene Anschläge 80 auf (Fig. 6 und 7). Die Anschläge 80 sitzen vorzugsweise auf einem gemeinsamen Träger 82, der am unteren Rahmenschenkel 32 parallel zu diesem verschiebbar angeordnet ist. Dazu weist der Träger 82 zwei parallel zueinander verlaufende Führungsschlitze 84 auf, die von seitlich am unteren Rahmenschenkel 32 befestigten Führungsgliedern 86 durchsetzt sind. Die Führungsschlitze 84 haben einen derartigen Verlauf, daß bei Verschieben des Trägers 82 die Anschläge 80 aus einer unterhalb der Oberkante 88 der unteren Rahmenschenkel 32 liegende Nichtgebrauchslage (Figur 6) in eine über die Oberkante 88 des unteren Rahmenschenkels 32 vorstehende Anschlagstellung (Figur 7) verstellbar und in der Anschlagstellung gegen ein Absenken gesichert sind. Die Sicherung wird dadurch erreicht, daß der eine Endbereich 90 der Führungsschlitze 86 senkrecht nach oben verläuft, so daß in Anschlagstellung der Träger 82 auf den in den Endbereichen befindlichen Führungsgliedern 86 aufruht. Gleichzeitig ist dadurch ein Verschieben des Trägers 82 in Längsrichtung des unteren Rahmenschenkels 32 verhindert.

Des weiteren kann die Oberseite der unteren Rahmenschenkel 32 sowie auch die Bodenplatte 26 eine Auflage, beispielsweise eine gekerbte Gummimatte, aufweisen, damit Werkstücke beim Transport verrutschfest abgestützt sind.

Um zur Aufbewahrung des Transportwagens 10 möglichst wenig Raum beanspruchen zu müssen, ist dieser in der Breite veränderbar. Hierzu sind die oberen Rahmenschenkel 38 abzunehmen und die Bodenplatte 26 in eine aufrechte Lage zu verschwenken, wodurch die Gestellseitenteile 16 und 18 freigegeben werden und in eine zum hinteren Gestellteil 14 annähernd parallele Lage um die vertikale Achse der Scharnierkörper 40 und 42 einschwenkbar sind.

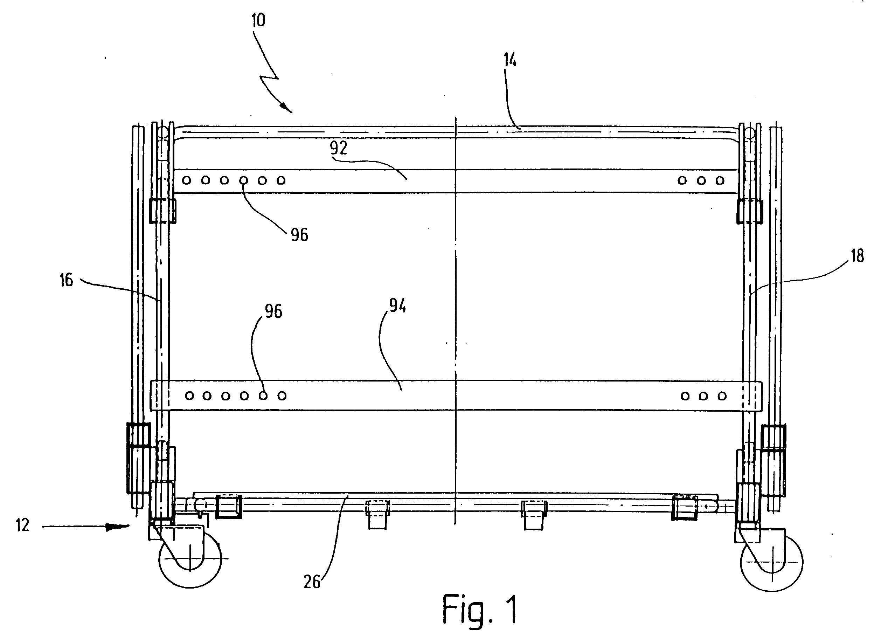

Mit 92 und 94 sind zwei Plattenhalteleisten bezeichnet, die im Abstand parallel zueinander zwischen den U-Schenkeln 15 des hinteren Gestellteils 14 befestigt sind (Fig. 1 und 3). Von diesen ragen horizontal angeordnete, fingerartig ausgebildete Plattenseitenanschläge 96 in Richtung auf die offene Vorderseite des Transportwagens 10 ab. Die Plattenhalteleisten 92 und 94 sowie die Plattenseitenanschläge 96 dienen zur seitlichen Abstützung von auf der Bodenplatte hochkant abgestellten Platten.

Eine weitere, in Fig.5 gestrichelt dargestellte Plattenhalteleiste 95 kann beispielsweise auch zwischen die Stangen 74 befestigt werden. Die Plattenhalteleiste 95 verläuft parallel zur Bodenplatte 26 und ist in veränderbarer Höhe an den Stangen abnehmbar befestigt. So ist eine Abstützung von zu transportierenden Werkstücken verschiedenster Größe auch zwischen den Stangen 74 gewährleistet.

Wie Figur 3 bis 5 zeigen, kann der Transportwagen 10 auf der Rückseite des hinteren Gestellseitenteils 14 noch mit einer zusätzlichen Aufnahmevorrichtung 98 ausgestattet sein. Die Aufnahmevorrichtung ist durch zwei U-förmige Halterungen gebildet, von denen jede mit einem der U-Schenkel 15 des hinteren Gestellseitenteils 14 verbunden ist. Der eine U-Schenkel 100 dieser Halterungen ist an dem unteren Scharnierkörper 42 befestigt und der andere U-Schenkel 102 ist über ein Verbindungsstück 104 mit dem U-Schenkel 100 und dem unteren Scharnierkörper 42 schwenkbar um eine durch den U-Schenkel 100 gebildete Achse verbunden. Der U-Schenkel 100 und der untere Scharnierkörper 42 sind auf den Schwenklaufrollen 30 abgestützt.

## Patentansprüche

1. Transportwagen, insbesondere für Plattenmaterial, mit einem im Grundriß rechteckförmigen Fahrgestell (12), das an der hinteren Wagenlängsseite ein aufrecht angeordnetes hinteres Gestellteil (14) sowie an beiden Wagenstirnseiten jeweils ein aufrecht angeordnetes Gestellseitenteil (16 bzw. 18) aufweist, wobei die jeweils einen rechteckigen Rahmen bildenden Gestellseitenteile (16, 18) am hinteren Gestellteil (14) um eine durch deren hinteren Rahmenschenkel (34) gebildete vertikale Schwenkachse nach innen einklappbar sind und in ihrer ausgeklappten, zum hinteren Gestellteil (12) senkrechten Stellung festlegbar sind,
**dadurch gekennzeichnet, daß**
vorderer und oberer Rahmenschenkel (36, 38) beider Gestellseitenteile (16, 18) von deren hinteren und unteren Rahmenschenkeln (34, 32) abnehmbar angeordnet sind.

2. Transportwagen nach Anspruch 1, dadurch gekennzeichnet, daß die unteren Rahmenschenkel (32) als Kastenprofile ausgebildet sind.

3. Transportwagen nach Anspruch 1 oder 2, dadurch gekennzeichnet, daß die beiden abnehmbaren Rahmenschenkel (36, 38) der Gestellseitenteile (16, 18) voneinander trennbar, zu einer Stange (74) zusammensteckbar und jede Stange (74) auf einem der unteren Rahmenschenkel (32) in Richtung auf das hintere Gestellteil (12) geneigt aufstellbar ist.

4. Transportwagen nach einem der vorhergehenden Ansprüche, dadurch gekennzeichnet, daß an jedem der unteren Rahmenschenkel (32) in dessen Längsrichtung im Abstand voneinander vorgesehene Anschläge (80) angeordnet sind, die aus einer unterhalb der Oberkante (88) der unteren Rahmenschenkel (32) liegenden Nichtgebrauchslage in eine über die Oberkante (88) des unteren Rahmenschenkels (32) vorstehende Anschlagstellung verstellbar sind.

5. Transportwagen nach Anspruch 4, dadurch gekennzeichnet, daß die Anschläge (80) auf einem gemeinsamen Träger (82) sitzen, der am unteren Rahmenschenkel (32) parallel zu diesem verschiebbar derart angeordnet ist, daß er in der Anschlagstellung gegen Absenken gesichert ist.

6. Transportwagen nach einem der vorhergehenden Ansprüche, dadurch gekennzeichnet, daß der die Schwenkachse bildende hintere Rahmenschenkel (34) der Gestellseitenteile (16, 18) im oberen und unteren Endbereich des hinteren Gestellteils (14) in Scharnierkörpern (40, 42) schwenkbar gelagert ist.

7. Transportwagen nach Anspruch 6, dadurch gekennzeichnet, daß die unteren Rahmenschenkel (32) jeweils mit den zugeordneten hinteren Rahmenschenkeln (34) drehfest verbunden sind.

8. Transportwagen nach Anspruch 6 oder 7, dadurch gekennzeichnet, daß der obere Scharnierkörper (40) ein Auflager (62) für das Hinterende des oberen Rahmenschenkels (38) bildet.

9. Transportwagen nach Anspruch 8, dadurch gekennzeichnet, daß in das Auflager (62) der vordere sowie der obere Rahmenschenkel (36 bzw. 38) aufrecht einsteckbar sind.

10. Transportwagen nach einem der vorhergehenden Ansprüche, dadurch gekennzeichnet, daß am hinteren Gestellteil (14) eine Wagenbodenplatte (26) hochklappbar angeordnet und in ihrer Gebrauchslage zwischen den Gestellseitenteilen (16, 18) gehalten ist.

11. Transportwagen nach Anspruch 10, dadurch gekennzeichnet, daß das hintere Gestellteil (14) oberhalb und parallel zu der Wagenbodenplatte (26) wenigstens eine Plattenhalteleiste (92, 94) aufweist, die eine Vielzahl von horizontal und in veränderbarem seitlichem Abstand voneinander angeordnete Plattenseitenanschläge (96) aufweist.

12. Transportwagen nach einem der Ansprüche 3 bis 11, dadurch gekennzeichnet, daß die Stangen (74) parallel zu der Wagenbodenplatte (26) wenigstens eine, in unterschiedlicher Höhe an den Stangen (74) festlegbare, abnehmbare Plattenhalteleiste (95) aufweisen.

## Claims

1. A transport trolley, in particular for panel material, comprising a chassis (12) which is rectangular in plan and which at the rear longitudinal side of the trolley has an uprightly arranged rear chassis portion (14) and at each of the two ends of the trolley a respective uprightly arranged chassis side portion (16 and 18 respectively), wherein the chassis side portions (16, 18) respectively forming a rectangular frame are foldable inwardly on the rear chassis portion (14) about a vertical pivot axis formed by the rear frame limb (34) thereof and can be fixed in their outwardly folded position in which they are perpendicular with respect to the rear chassis portion (14), characterised in that front and upper frame limbs (36, 38) of both chassis side portions (16, 18) are arranged removably from the rear and lower frame limbs (34, 32) thereof.

2. A trolley according to claim 1 characterised in that the lower frame limbs (32) are in the form of box profile members.

3. A trolley according to claim 1 or claim 2 characterised in that the two removable frame limbs (36, 38) of the chassis side portions (16, 18) separably from each other can be assembled together to form a bar (74) and each bar (74) can be set up on one of the lower frame limbs (32) inclinedly in a direction towards the rear chassis portion (14).

4. A trolley according to one of the preceding claims characterised in that arranged on each of the lower frame limbs (32) at spacings from each other in the longitudinal direction thereof are abutments (80) which are displaceable from a non-use position of lying below the top edge (88) of the lower frame limb (32) into an abutment position of projecting above the top edge (88) of the lower frame limb (32).

5. A trolley according to claim 4 characterised in that the abutments (80) are disposed on a common carrier (82) which is arranged on the lower frame limb (32) displaceably in parallel relationship therewith in such a way that in the abutment position it is prevented from moving downwardly.

6. A trolley according to one of the preceding claims characterised in that the rear frame limb (34), which forms the pivot axis, of the chassis side portions (16, 18) is mounted pivotably in hinge bodies (40, 42) in the upper and lower end regions of the rear chassis portion (14).

7. A trolley according to claim 6 characterised in that the lower frame limbs (32) are respectively non-rotatably connected to the associated rear frame limbs (34).

8. A trolley according to claim 6 or claim 7 characterised in that the upper hinge body (40) forms a support (62) for the rear end of the upper frame limb (38).

9. A trolley according to claim 8 characterised in that the front and the upper frame limbs (36 and 38 respectively) can be inserted upright into the support (62).

10. A trolley according to one of the preceding claims characterised in that a trolley bottom panel (26) is arranged on the rear chassis portion (16) in such a way that it can be pivoted upwardly and is held in its position of use between the chassis side portions (16, 18).

11. A trolley according to claim 10 characterised in that the rear chassis portion (14) has above and in parallel relationship to the trolley bottom panel (26) at least one panel holding bar (92, 94) having a plurality of panel side abutments (96) which are arranged horizontally and at variable lateral spacings from each other.

12. A trolley according to one of claims 3 to 11 characterised in that the bars (74) have in parallel relationship with the trolley bottom panel (26) at least one removable panel holding bar (95) which can be fixed at different heights to the bars (74).

## Revendications

1. Chariot, notamment pour panneaux, avec un châssis (12) de base rectangulaire qui présente, sur le côté long arrière du chariot, un élément de châssis arrière (14) monté verticalement ainsi que, sur les deux faces latérales du chariot, un élément de châssis latéral (16 ou 18) monté verticalement, les éléments de châssis latéraux (16, 18) formant chacun un cadre rectangulaire et étant susceptibles d'être rabattus vers l'intérieur, sur l'élément de châssis arrière (14), autour d'un axe de pivotement vertical formé par leur montant arrière (34) et d'être fixés dans leur position déployée, perpendiculaire à l'élément de châssis arrière (14), caractérisé en ce que le montant avant et la traverse supérieure (36, 38) du cadre des deux éléments de châssis latéraux (16, 18) sont agencés de manière amovible par rapport au montant arrière et à la traverse inférieure (34, 32) de ces derniers.

2. Chariot selon la revendication 1, caractérisé en ce que les traverses inférieures (32) des cadres sont des profilés de section rectangulaire.

3. Chariot selon la revendication 1 ou 2, caractérisé en ce que le montant et la traverse amovibles (36, 38) des éléments de châssis latéraux (16, 18) sont susceptibles d'être détachés l'un de l'autre et reliés à une barre (74), chacune des barres (74) pouvant être montée de façon inclinée, sur l'une des traverses inférieures (32) du cadre, en direction de l'élément de châssis arrière (12).

4. Chariot selon l'une quelconque des revendications précédentes, caractérisé en ce que des butées (80) sont agencées à distance les unes des autres sur chacune des traverses inférieures (32), dans le sens longitudinal de ces dernières, lesdites butées pouvant être déplacées d'une position de repos, sous le bord supérieur (88) des traverses inférieures (32), vers une position de blocage, en débordement du bord supérieur (88) des traverses inférieures (32).

5. Chariot selon la revendication 4, caractérisé en ce que les butées (80) reposent sur un support commun (82) agencé sur la traverse inférieure (32) et mobile parallèlement à cette dernière, de manière à éviter tout affaissement en position de blocage.

6. Chariot selon l'une quelconque des revendications précédentes, caractérisé en ce que le montant arrière (34) du cadre des éléments de châssis latéraux (16, 18), qui forme l'axe de pivotement, est monté pivotant dans des éléments charnières (40, 42), au niveau des extrémités supérieure et inférieure de l'élément de châssis arrière (14).

7. Chariot selon la revendication 6, caractérisé en ce que les traverses inférieures (32) sont solidaires en rotation des montants arrières (34) associés.

8. Chariot selon la revendication 6 ou 7, caractérisé en ce que l'élément charnière supérieur (40) forme un support (62) pour l'extrémité arrière de la traverse supérieure (38).

9. Chariot selon la revendication 8, caractérisé en ce que le montant avant et la traverse supérieure (36 et 38) peuvent être emboîtés verticalement dans le support (62).

10. Chariot selon l'une quelconque des revendications précédentes, caractérisé en ce qu'une plaque de fond (26) du chariot est agencée sur l'élément de châssis arrière (14) de manière à pouvoir être rabattue vers le haut et maintenue, en position d'utilisation, entre les éléments de châssis latéraux (16, 18).

11. Chariot selon la revendication 10, caractérisé en ce que l'élément de châssis arrière (14) présente au moins une barre de maintien de panneaux (92, 94) agencée au-dessus de et parallèlement à la plaque de fond (26) du chariot et présentant une pluralité de butées latérales (96) agencées horizontalement à des intervalles latéraux variables.

12. Chariot selon l'une quelconque des revendications 3 à 11, caractérisé en ce que les barres (74) présentent au minimum une barre de maintien de panneaux (95) amovible, parallèle à la plaque de fond (26) du chariot et susceptible d'être fixée à différentes hauteurs sur les barres (74).
